# EUROPÄISCHE PATENTSCHRIFT

(11) **EP 1 863 675 B1**
(45) Veröffentlichungstag und Bekanntmachung des Hinweises auf die Patenterteilung: **16.07.2008**
(21) Anmeldenummer: 06701732.7
(22) Anmeldetag: 25.01.2006
(51) Int. Cl.: B60R 16/02, B60R 21/16

(54) **SICHERHEITSSYSTEM**
PROTECTION SYSTEM
SYSTEME DE PROTECTION

(30) Priorität: 23.03.2005 DE 102005013450
(43) Veröffentlichungstag der Anmeldung: 12.12.2007
(73) Patentinhaber: ROBERT BOSCH GMBH, 70442 Stuttgart (DE)
(72) Erfinder: HEILMANN, Gernod, 71282 Hemmingen (DE); NGUYEN, Huu-dat, 70437 Stuttgart (DE)
(86) Internationale Anmeldenummer: PCT/EP2006/050441
(87) Internationale Veröffentlichungsnummer: WO 2006/100138

(56) Entgegenhaltungen:
- EP-A- 0 421 573
- PATENT ABSTRACTS OF JAPAN Bd. 015, Nr. 155 (M-1104), 18. April 1991 (1991-04-18) & JP 03 028046 A (KOMATSU LTD; others: 01), 6. Februar 1991 (1991-02-06)
- PATENT ABSTRACTS OF JAPAN Bd. 2003, Nr. 12, 5. Dezember 2003 (2003-12-05) & JP 2005 009924 A (HONDA MOTOR CO LTD), 13. Januar 2005 (2005-01-13)

## Beschreibung

### Stand der Technik

Die Erfindung betrifft ein Sicherheitssystem nach dem Oberbegriff des Anspruchs 1.

Ein Sicherheitssystem ist beispielsweise aus dem Aufsatz von W. Suchowerskyj "Evolution en matiere de detecteurs de choc" in 1141 Ingenieurs de l'Automobile (1982) No.6, Seiten 69 bis 77, Paris, bekannt. Das Sicherheitssystem umfasst eine Sensorik mit einer Mehrzahl von Sensoren, wenigstens ein Steuergerät und eine Mehrzahl von Rückhaltemitteln, wie beispielsweise Airbags und/oder Gurtstraffer. Die Sensorik eines solchen Sicherheitssystems dient der Erfassung und Beurteilung einer Unfallsituation. Aufgrund der gewonnenen Daten werden die Zeitpunkte zum Auslösen der geeigneten Rückhaltemittel bestimmt. Gebräuchlich sind heute Beschleunigungssensoren, aber auch Drehratensensoren und Drucksensoren. Sie dienen zur Messung der Beschleunigung, der Drehrate oder einer Intrusion in das Fahrzeug in den verschiedenen Achsen und damit zur Erkennung des Verlaufs und der Schwere eines Unfalls. Die Sensoren können dabei in einem zentralen Steuergerät oder als auch als externe Komponenten in dem Frontbereich oder in den Seitenbereichen des Fahrzeugs angeordnet sein. Wie bei allen Komponenten eines Sicherheitssystems kommt der Überwachung dieser Sensoren eine entscheidende Bedeutung bei, was die Sicherheit und Verfügbarkeit des gesamten Sicherheitssystems angeht. Nur wenn sichergestellt ist, dass die Sensorik fehlerfrei arbeitet, kann das Sicherheitssystem seine vorgesehene Schutzwirkung entfalten. Die externen Sensoren sind üblicherweise über eine 2-Draht-Leitung mit einem Steuergerät verbunden. Diese versorgt die Sensoren mit elektrischer Energie aus dem Steuergerät und dient auch zur Übertragung der digitalen Daten von den Sensoren zu dem Steuergerät. Dazu werden die Daten von den Sensoren vorzugsweise seriell als Stromwerte übermittelt. Der Überwachung solcher externer Sensoren kommt dabei eine besondere Bedeutung zu, da man bei einem in dem Fahrzeug verlegten Kabelbaum stets mit Kurzschlüssen oder Unterbrechungen rechnen muss. Die Überwachung muss einerseits die elektronischen Komponenten schützen, also insbesondere bei Kurzschlüssen nach Masse oder Batteriespannung. Andererseits ist es gerade bei externen Komponenten wichtig, die eigentliche Fehlerursache möglichst genau zu erkennen, um eine Reparatur in der Werkstatt schnell und kostengünstig durchführen zu können. Bei der heute üblichen Überwachung wird dazu eine analoge Messung der Spannung auf der Versorgungsleitung durchgeführt. Damit kann man Kurzschlüsse nach Masse oder Batterie erkennen, weil das Potential dann von der normalen Versorgungsspannung der externen Sensoren (z.B. 6V) abweicht. Wenn der externe Sensor keine Daten schickt, so kann man aber nicht eindeutig sagen, ob dies durch eine Leitungsunterbrechung oder aufgrund eines internen Defekts im Sensor verursacht ist. Mit dem bisher üblichen Verfahren, also der Messung der Spannung auf der Zuleitung der externen Sensoren, ist man in der Lage, bestimmte Fehlerbilder zu erkennen. Wenn der periphere Sensor keine Daten mehr schickt, erfolgt eine Diagnose nach folgendem Schema: Messung der Spannung auf der Zuleitung. Ist diese deutlich unter dem nominalen Versorgungspegel der Sensoren, so deutet dies auf einen Kurzschluss nach Masse hin. Ist das Potential aber über der Schwelle, wird die Versorgung des Sensors abgeschaltet und eine erneute Messung durchgeführt. Jetzt sollte die Zuleitung potentialfrei sein. Wird hierbei trotzdem eine Spannung gemessen, deutet das auf einen Kurzschluss nach Batterie hin. Wird hingegen keine Spannung gemessen, schließt man auf eine Leitungsunterbrechung oder einen Sensordefekt als Ursache des Sensorfehlers. Diese Art der Diagnose gestattet es also, im Wesentlichen drei Fehlerbilder zu klassifizieren: Kurzschluss nach Masse, Kurzschluss nach Batterie, Leitungsunterbrechung oder Sensor mit internem Defekt. Während die ersten beiden Fehlerarten eindeutig dem Kabelbaum des Fahrzeugs zuzuordnen sind, ist dies bei der dritten Fehlerkategorie nicht ohne weiteres möglich. Ist dieser Fehler in dem Fehlerspeicher eingetragen, muss in der Werkstatt durch Probieren herausgefunden werden, ob der Fehler in dem Kabelbaum des Fahrzeugs oder in dem Sensor selbst zu suchen ist. Dies ist aber zeitaufwendig und teuer.

Aus der gattungsgemäßen EP 0 421 573 A2 ist ein Ansteuerungsschaltkreis mit drei Crashsensoren bekannt. Eine Schaltkreisdiagnose wird durch einen Vergleich von Spannungen über dem Schaltkreis erreicht und über die Wirkungen, die eine Anhebung der Versorgungsspannung und/oder der Betrieb von einer Mehrzahl von Stromsenken, die an den Schaltkreis angeschlossen sind, haben. Aus Patent Abstract of Japan JP 2005 00 9924 ist eine Diagnoseschaltung für einen Temperatursensor bekannt. Dabei wird der Temperatursensor über einen Widerstand nach Masse geschaltet und das Ausgangssignal des Temperatursensors überwacht. Aus Patent Abstract of Japan JP 03028046 ist eine On-Board-Überwachung mit einer Diagnosefunktion für einen Sensorschaltkreis bekannt. Dabei ist ein Widerstand parallel zu dem elektrischen Schaltkreis des Sensors geschaltet. Dabei wird eine Spannungsveränderungsbedingung überwacht.

### Vorteile der Erfindung

Die Erfindung ermöglicht eine gezieltere und schnellere Erkennung der Fehlerursache und kann daher zu einer Senkung von Aufwand und Kosten der Reparaturen beitragen. Dies wird dadurch ermöglicht, dass das Sicherheitssystem Mittel für die Prüfung der Sensoren und der zu den Sensoren führenden Leitungen umfasst. Diese Mittel umfassen Strommessmittel, die die Sensoren und die Leitungen mit einem Prüfstrom beaufschlagen. Der Prüfstrom fließt auch durch einen in Reihe zu dem Sensor geschalteten Widerstand und ruft dort einen Spannungsabfall hervor, der in einer Verstärkungseinrichtung verstärkt und in einem Steuergerät ausgewertet wird.

### Zeichnung

Die Erfindung wird nachfolgend unter Bezug auf die Zeichnung dargestellt. Dabei zeigt die Figur ein Blockschaltbild eines Sicherheitssystems.

### Beschreibung der Ausführungsbeispiele

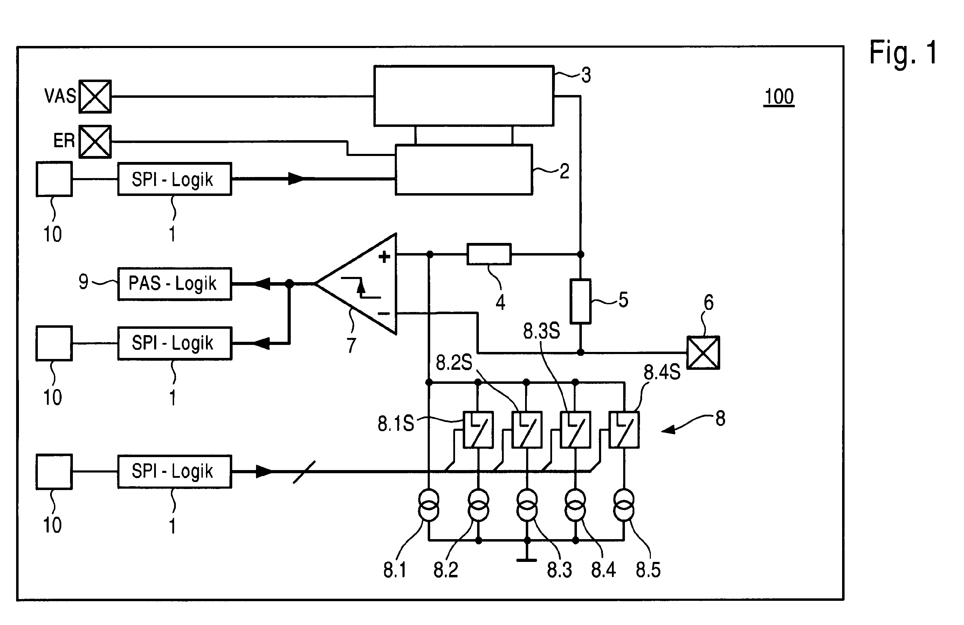

Die Erfindung wird nachfolgend unter Bezug auf das in der Zeichnung dargestellte Ausführungsbeispiel beschrieben. Die Figur zeigt in einem Blockschaltbild den prinzipiellen Aufbau einer so genannten PAS-Schnittstelle (PAS = Peripheral Acceleration Sensor) 100. Die Schnittstelle 100 umfasst ein erstes, auch als SPI-Logik bezeichnetes Funktionsmodul 1 (SPI = Serial Peripheral Interface), das mit einem Steuergerät 10 verbunden ist. Der besseren Übersicht halber sind dieses Funktionsmodul 1 und das Steuergerät 10 in Figur 1 mehrfach dargestellt. Das Funktionsmodul 1 ist mit der Treiberstufe 2 einer Endstufe 3 verbunden. Weiterhin ist das Funktionsmodul 1 mit dem Ausgang einer Verstärkerschaltung 7 verbunden. Schließlich ist das Funktionsmodul 1 mit einer Referenzstromquelle 8 verbunden, die aus mehreren Referenzstromquellen 8.1,8.2,8.3,8.4,8.5 besteht. Ein Ausgang der Endstufe 3 ist über einen Widerstand 5 mit dem Sensor 6 und über einen weiteren Widerstand 4 mit dem nicht-invertierenden Eingang der Verstärkungseinrichtung 7 verbunden. Dieser Eingang ist auch mit einem Anschluss der Referenzstromquelle 8.1 verbunden, deren zweiter Anschluss an Masse liegt. Weiterhin ist der nicht-invertierende Eingang der Verstärkungseinrichtung 7 mit je einem Pol von Schaltelementen 8.1S verbunden, die in Serie zu den Referenzstromquellen 8.2, 8.3,8.4,8.5 geschaltet sind. Der invertierende Eingang der Verstärkungseinrichtung 7 ist mit dem Verbindungspunkt zwischen dem Widerstand 5 und dem Sensor 6 verbunden. Weiterhin ist der Ausgang der Verstärkungseinrichtung 7 mit einem Funktionsmodul 9 verbunden. Die Versorgung der externen Sensoren 6 erfolgt von dem Steuergerät über eine 2-Draht-Leitung. Die Daten werden in Gestalt von Stromimpulsen übertragen. Zu diesem Zweck ist eine Stromschnittstelle vorgesehen. Der Sensor 6 prägt den binären Datenstrom in Gestalt von Stromimpulsen ein. Dazu wird eine Konstantstromsenke in dem Sensor 6 geschaltet, die den Strom auf der Leitung zu dem Steuergerät erhöht. Wenn diese Stromsenke den Gesamtstrom über den Grundbedarf des Sensors 6 hinaus anhebt, wird dies detektiert. Dazu ist es natürlich notwendig, den Grundbedarf des Sensors 6 zu kennen. Die Messung des Stroms erfolgt auf Seiten des Steuergeräts durch einen Messwiderstand (Widerstand 5). Über die Verstärkungseinrichtung 7, vorzugsweise einen Operationsverstärker, kann der Spannungsabfall über dem Widerstand 5 bestimmt werden. Steigt der Strom über die Grundlast des Sensors 6 an, wird das über den in die Verstärkungseinrichtung 7 eingebauten Schmitt-Trigger erkannt und so der in Form von Stromimpulsen übertragene serielle Datenstrom dekodiert. Die Vielzahl unterschiedlicher Sensoren 6 mit ihrem jeweiligen Grundbedarf bedingt, dass der für die Strommmessung eingesetzte Widerstand 5 an den Gesamtstromverbrauch des Sensors 6 anpassbar sein muss. Während dafür bei älteren Sicherheitssystemen externe Messwiderstände vorgesehen waren, sind diese bei neuesten Sicherheitssystemen integriert und programmierbar. Vorteilhaft kann dabei der Messbereich in Schritten von jeweils etwa 3mA in einem Bereich von etwa 3mA bis etwa 30mA einstellbar sein. Bei bisher üblichen Sicherheitssystemen ist der Ausgang eines Strommessverstärkers mit einer Logikschaltung verbunden, die den seriellen Datenstrom empfängt. Hier werden, entsprechend dem häufig verwendeten Manchester Code, die Daten und Taktinformationen voneinander getrennt und aufbereitet. Zur Messung des Stroms in der Zuleitung, muss lediglich der Ausgang der Verstärkungseinrichtung 7 von dem Steuergerät auslesbar sein. Dazu wird der Ausgang der Verstärkungseinrichtung auf ein Register geführt, das über einen SPI Befehl (Funktionsmodul 1) auslesbar ist. Wenn nun eine Messung des Stroms stattfinden soll, um eine eventuelle Leitungsunterbrechung zu erkennen, wählt man typischerweise den empfindlichsten Messbereich, hier also 3mA. Bei eingeschalteter Versorgungsspannung kann jetzt erfasst werden, ob ein Strom größer 3mA durch den externen Sensor 6 fließt. Ist das nicht der Fall, so kann man auf eine Leitungsunterbrechung schließen. Fließt ein Strom, so ist der Kabelbaum bis zu dem Sensor 6 intakt und der Fehler muss nun auf Seiten des Sensors 6 vermutet werden. Durch einen Steuerbefehl des Funktionsmoduls 1 an die Treiberstufe 2 wird die Endstufe 3 gesteuert und der Sensor 6 beliebig ein- und ausgeschaltet. Ein Stromfluss durch den mit dem Sensor 6 in Reihe geschalteten Widerstand 5 erzeugt einen Spannungsabfall, der über den Widerstand 4 der Verstärkungseinrichtung 7 zugeleitet wird. Die Spannung wird in der einen Schmitt-Trigger umfassenden Verstärkungseinrichtung 7 verstärkt und ausgewertet. Der Ausgang wird aktiv, wenn der Strom eine vorgebbare Schwelle überschreitet. Das Signal wird dann dem Funktionsmodul 9 (PAS-Logik) zugeleitet, das den Datenstrom dekodiert. Der Messbereich der Strommessung ist über eine einstellbare Referenzstromquelle 8 einstellbar. Die Referenzstromquelle 8 besteht aus vier einzelnen Referenzstromquellen, die einzeln durch Betätigung der Schaltmittel 8.1S, 8.2S, 8.3S,8.4S, 8.5S zugeschaltet werden können. Auf diese Art und Weise werden insgesamt 16 verschiedene Messbereiche im Bereich von 3mA bis 20mA abgedeckt. Damit das Steuergerät 10 die Stromaufnahme des Sensors 6 messen kann, muss lediglich der Ausgang der Verstärkungseinrichtung 7 über ein SPI Register (Funktionsmodul 1) auslesbar sein. Hier zeigt ein gesetztes Bit an, das der Strom auf der Zuleitung über oder unter einer vorgebbaren Schwelle liegt. Die Höhe der Schwelle kann auf einfache Weise über die Wahl des Messbereichs der Verstärkungseinrichtung 7 eingestellt werden.

## Patentansprüche

1. Sicherheitssystem (100) für Fahrzeuginsassen mit einem Steuergerät (10) und mit von dem Steuergerät (10) abgesetzt angeordneten Sensoren (6), die mit dem Steuergerät (10) über Leitungen verbunden sind, wobei das Sicherheitssystem (100) Mittel für die Prüfung der Sensoren (6) und der Leitungen zu den Sensoren (6) umfasst, **dadurch gekennzeichnet, dass** diese Mittel Strommessmittel sind, wobei die Strommessmittel die Leitungen und die Sensoren mit einem Prüfstrom beaufschlagen, dass ein Messbereich für eine Strommessung des Prüfstroms durch eine einstellbare erste Referenzstromquelle (8) eingestellt wird, wobei die erste Referenzstromquelle (8) eine Mehrzahl von zweiten Referenzstromquellen (8.1,8.2,8.3,8.4,8.5) umfasst, dass das Sicherheitssystem (100) Schaltmittel (8.1S, 8.2S, 8.3S, 8.4S) umfasst, mit denen die Referenzstromquellen (8.1, 8.2, 8.3, 8.4) individuell zur Einstellung des Messbereichs steuerbar sind.

2. Sicherheitssystem nach Anspruch 1, **dadurch gekennzeichnet, dass** eine steuerbare Endstufe (3) für die Energieversorgung des Sensors (6) vorgesehen ist.

3. Sicherheitssystem nach einem der vorhergehenden Ansprüche, **dadurch gekennzeichnet, dass** in Reihe zu dem Sensor (6) ein Widerstand (5) geschaltet ist.

4. Sicherheitssystem nach einem der vorhergehenden Ansprüche, **dadurch gekennzeichnet, dass** eine Verstärkungseinrichtung (7) für die Verstärkung des an dem Widerstand (5) entstehenden Spannungsabfalls vorgesehen ist.

## Claims

1. Safety system (100) for vehicle occupants, having a controller (10) and having sensors (6) which are arranged remote from the controller (10) and are connected to the controller (10) via lines, with the safety system (100) comprising means for testing the sensors (6) and the lines to the sensors (6), **characterized in that** these means are current-measuring means, with the current-measuring means applying a test current to the lines and the sensors, **in that** a measurement range for measuring the test current is set by a settable first reference current source (8), with the first reference current source (8) comprising a plurality of second reference current sources (8.1, 8.2, 8.3, 8.4, 8.5), **in that** the safety system (100) comprises switching means (8.1S, 8.2S, 8.3S, 8.4S) with which the reference current sources (8.1, 8.2, 8.3, 8.4) can be individually controlled in order to set the measurement range.

2. Safety system according to Claim 1, **characterized in that** a controllable output stage (3) is provided for supplying power to the sensors (6).

3. Safety system according to either of the preceding claims, **characterized in that** a resistor (5) is connected in series with the sensor (6).

4. Safety system according to one of the preceding claims, **characterized in that** an amplification device (7) is provided for amplifying the voltage drop produced across the resistor (5).

## Revendications

1. Système de sécurité (100) pour les occupants d'un véhicule comportant un appareil de commande (10) et des capteurs (6) déportés de l'appareil de commande (10), ces capteurs étant reliés par des lignes à l'appareil de commande (10), le système de sécurité (100) comprenant des moyens pour contrôler les capteurs (6) et les lignes reliées aux capteurs (6),
**caractérisé en ce que**
les moyens sont des moyens de mesure de courant,
les moyens de mesure de courant appliquant un courant de contrôle aux lignes et aux capteurs,
une plage de mesure étant réglée pour une mesure de courant pour le courant de contrôle par une première source de courant de référence (8), réglable,
la première source de courant de référence (8) comprenant plusieurs secondes sources de courant de référence (8.1, 8.2, 8.3, 8.4, 8.5),
le système de sécurité (100) comprenant des moyens de commutation (8.1S, 8.2S, 8.3S, 8.4S) à l'aide desquels on commande les sources de courant de référence (8.1, 8.2, 8.3, 8.4) individuellement pour régler la plage de mesure.

2. Système de sécurité selon la revendication 1,
**caractérisé par**
un étage de puissance (3), commandé pour l'alimentation en énergie du capteur (6).

3. Système de sécurité selon l'une quelconque des revendications précédentes,
**caractérisé par**
une résistance (5) branchée en série sur le capteur (6).

4. Système de sécurité selon l'une quelconque des revendications précédentes,
**caractérisé par**
une installation d'amplification (7) pour amplifier la chute de tension aux bornes de la résistance (5).
